Europäisches Patentamt

European Patent Office

Office européen des brevets

(11) Publication number: **0 342 492 B1**

## EUROPEAN PATENT SPECIFICATION

(45) Date of publication of patent specification: **07.09.94**  (51) Int. Cl.5: **C22C 38/08**, B60C 9/00

(21) Application number: **89108367.7**

(22) Date of filing: **10.05.89**

The file contains technical information submitted after the application was filed and not included in this specification

(54) **Steel cord with high tensile strength and radial tires reinforced with steel cord.**

(30) Priority: **12.05.88 JP 116565/88**

(43) Date of publication of application:
**23.11.89 Bulletin 89/47**

(45) Publication of the grant of the patent:
**07.09.94 Bulletin 94/36**

(84) Designated Contracting States:
**DE FR GB IT**

(56) References cited:
FR-A- 2 473 080
US-A- 4 020 887
US-A- 4 488 587
US-A- 4 738 096

(73) Proprietor: **TOKUSEN KOGYO COMPANY LIMITED**
**1081-banchi**
**Minamiyama**
**Sumiyoshi-cho Ono Hyogo (JP)**

(72) Inventor: **Kuromizu, Fumio**
**1081, Sumiyoshi-cho**
**Ono Hyogo (JP)**
Inventor: **Shimizu, Toshiaki**
**1081, Sumiyoshi-cho**
**Ono Hyogo (JP)**
Inventor: **Kushibe, Haruo**
**1081, Sumiyoshi-cho**
**Ono Hyogo (JP)**

(74) Representative: **Lange, Gerd, Dipl.-Ing.**
**Patentanwalt,**
**Nachtigallenweg 8**
**D-32425 Minden (DE)**

Rank Xerox (UK) Business Services
(3.10/3.09/3.3.3)

**Description**

BACKGROUND OF THE INVENTION

Field of the invention:

This invention relates to a steel cord of high tensile strength and high toughness for use as an reinforcing material of rubber products, such as vehicle tires, conveyor belts, high pressure hoses, etc.

Description of the prior art:

Conventional steel cord of high tensile strength is composed of steel wire which is made by drawing wire rod (SWRS82A, for example) containing 0.80~0.85% by weight carbon, 0.12~0.32% by weight silicon and 0.30~0.60% by weight manganese, the remainder being iron and incidental impurities into steel wire having tensile strength of more than 2844 N/mm$^2$ (290 kg/mm$^2$) after final wire drawing. More particularly, conventional steel cord is formed in the following way, namely, wire rod of a diameter of 5.0~6.4mm is drawn by repeating a drawing process and a patenting process, is subjected to brass plating and is formed into very fine steel wire of the desired diameter by a final drawing process. Plural numbers of such very fine steel wire are twisted together by a stranding machine into a steel cord.

A plurality of such steel cords are covered with vulcanized rubber as they are arranged in parallel at the desired space, for use as reinforcing material of rubber products, such as vehicle tires.

In the conventional wire rod, however, if it is drawn into a steel wire having tensile strength of more than 2844 N/mm$^2$ (290 kg/mm$^2$) after final drawing, especially a level of high strength of more than 3236 N/mm$^2$ (330 kg/mm$^2$) is reached, ductility and toughness represented by values of RA (reduction of area) and TN (torsion) are liable to deteriorate. Thus, breakage of wire during the drawing operation increases rapidly and also breakage of very fine steel wire during the stranding operation increases rapidly, with the result that productivity of steel cord is impeded.

Since rubber products, especially vehicle tires, are used under various conditions, steel wire which composes steel cord is required to have high strength and high toughness and to be a perfect composite body with rubber so that steel cord can perform its duties as reinforcing material.

However, since steel wire which composes conventional steel cord is low both in strength and toughness, strength of steel cord per unit weight is also low. In order to prevent it, it is inevitable to increase the number of steel cords to be embedded in a tire. This is against the lightening of tire, comfortableness to ride in and durability.

If adhesion between steel cord and rubber is bad, steel cord separates from rubber during running of a car, namely, so-called "separates phenomenon" takes place. Besides, steel wire composing steel cord gets rusty due to water in rubber or water and salt which have entered rubber from the outside and such rust spreads abruptly in a lengthwise direction of cord and as a result, strength of steel cord lowers to a large extent and "separates phenomenon" is accelerated, namely, durability of tires is reduced considerably.

SUMMARY OF THE INVENTION

An object of the present invention is to improve fatigue-resistance and strength per unit weight of steel cord by increasing strength and toughness of steel wire which constitutes a steel cord.

Another object of the present invention is to prevent water from getting into a steel cord by making a steel cord perfectly coverable with rubber by improving its adhesiveness to rubber. A further object of the present invention is to prolong the life of steel cord as a reinforcing material of rubber products, especially vehicle tires. A still further object of the present invention is to improve durability, economy and comfortableness to ride in of tires by using steel cord under the present invention for the whole part or a part of a belt portion, a carcass portion and a chafer portion of a tire.

In order to attain the above objects, according to the present invention, a steel cord comprising a plurality of very fine steel wires is twisted together, each having a wire diameter of ranging form 0.10 to 0.50mm and containing

from 0.75 to 0.95 % by weight carbon;

from 0.45 to 1.20 % by weight silicon;

from 0.30 to 0.90 % by weight manganese;

from 0.05 to 1.0 % by weight nickel; and

the remainder being iron and incidental impurities.

Particular embodiments of the invention are set out in the claims 2 to 12.

BRIEF DESCRIPTION OF THE DRAWING

The nature and advantage of the present invention will be made more apparent from the following description made with reference to the accompanying drawings, in which:

Fig. 1 through to Fig. 3 are comparative graphs of the result of each test of the conventional steel wire and the improved steel wire, of which Fig. 1 is a comparative graph, showing the result of Hunter type fatigue test carried out after samples were left under corrosion conditions; Fig. 2 is a comparative graph, showing the result of the test of loss in quantity by corrosion in relation to solutions of different pH; and Fig. 3 is a comparative graph, showing the result of Hunter type fatigue test in solutions of different pH;

Fig. 4 through to Fig. 9 are cross sections, each showing an embodiment of the steel cord according to the present invention; and

Fig. 10 shows an embodiment of a tire using steel cord according to the present invention, in which Fig. 10A is a rough cross section; and Fig. 10B is a rough cross section of a reinforcing material.

DETAILED DESCRIPTION OF THE INVENTION

An example of the result of the studies is explained below.

Both the conventional steel wires 1 - 7 and the improved steel wires 8 - 10, all having chemical ingredients (Wt %) shown in Table I and diameter of 5.5mm, were subjected to a patenting treatment, a pre-treatment of descaled lubricant film and a drawing process by a wire drawing machine. By repeating these treatments and process, they were made into steel wires of medium size, which were subjected to a final patenting treatment under such conditions that metallic organization which is high in patenting strength and suitable for the wire drawing process is obtainable. Then, they were given brass plating (as a treatment prior to a wire drawing process) for improving drawability and adhesiveness to rubber and lastly subjected to a final wire drawing process. Thus, very fine steel wires of (I) a wire diameter of 0.20mm and a reduction of surface 98.1% and (II) a diameter of 0.30mm and reduction of surface 97.1% were obtained.

Various steel wires thus obtained were measured for the reduction of area value (RA) and the torsion value (TN) in the tensile strength (TS) of steel wire by using a tensile tester and a torsion tester, with the results as shown in Table I.

## TABLE I

| Classi-fication | Symbol | Chemical ingredients(Wt%) | | | | TS | | RA % | TN Times | Remark |
|---|---|---|---|---|---|---|---|---|---|---|
| | | C | Si | Mn | Ni | $N/mm^2$ | $(kg/mm^2)$ | | | |
| I  Conventional steel wire | 1 | 0.81 | 0.15 | 0.56 | Tr | 3472 | (354) | 32 | 17 | For comparison |
| | 2 | 0.89 | 0.14 | 0.54 | Tr | 3530 | (360) | 35 | 14 | C up |
| | 3 | 0.87 | 0.71 | 0.53 | Tr | 3530 | (360) | 41 | 28 | Si up |
| | 4 | 0.86 | 1.18 | 0.53 | 0.01 | 3599 | (367) | 39 | 21 | ″ |
| | 5 | 0.88 | 0.20 | 0.54 | 0.52 | 3530 | (360) | 41 | 23 | Ni up |
| II  Improved steel wire | 8 | 0.86 | 0.72 | 0.63 | 0.49 | 3727 | (380) | 43 | 35 | Si Ni up |
| | 9 | 0.84 | 0.63 | 0.56 | 0.25 | 3373 | (344) | 41 | 31 | ″ |
| | 10 | 0.83 | 0.68 | 0.57 | 0.50 | 3413 | (348) | 47 | 36 | ″ |
| Conven. steel wire | 6 | 0.83 | 0.64 | 0.57 | 0.01 | 3383 | (345) | 39 | 34 | Si up |
| | 7 | 0.82 | 0.20 | 0.57 | 0.01 | 3138 | (320) | 38 | 32 | For comparison |

As is obvious from the above table, the improved steel wire containing the increased amounts of Si and Ni shows tensile strength (TS) of more than 3628 N/mm² (370 kg/mm²) in the case of (I) (wire diameter of 0.20mm) and tensile strength (TS) of more than 3334 N/mm² (340 kg/mm²) in the case of (II) (wire diameter of 0.30mm), all having reached the target of RA (more than 40%) and TN (more than 30 times) and showing effectiveness for toughness retention. On the other hand, the conventional steel wire has not reached the target in either of RA and TN or in both of them and did not show the desired effectiveness for toughness retention.

Similar results have been obtained from the improved steel wire of a wire diameter of 0.10~0.50mm and a reduction of surface 95.0~98.5%.

Thus, in a very fine steel wire for steel cord, we have succeeded in obtaining the improved steel wire having more than 40% RA, more than 30 times TN and improved ductility and toughness, even though tensile strength is raised to more than 3727 N/mm² (380 kg/mm²), by increasing Si content within the range of 0.45 to 1.20% by weight and Ni content within the range of 0.05 to 1.0% by weight, with C and Mn of a proper % by weight as basic elements to be added.

In view of the rusting of steel cord mentioned above, with the object of improving corrosion-resistance of the improved wire rod having high strength and high toughness, we made very fine steel wires of a diameter of 0.25mm 14 - 20 (the improved steel wires) and 11 - 13 (the conventional steel wires) by subjecting material wire rods, each having chemical ingredients shown in Table II, to the repeated wire drawing process and patenting treatment, brass plating and final wire drawing process. Tests were carried out with such very fine steel wire, with the results as shown in Table II.

4

EP 0 342 492 B1

TABLE II

| Classi-fication | | No. | Chemical ingredients (Wt%) | | | | | | | | TS | | RA % | TN Times |
| --- | --- | --- | --- | --- | --- | --- | --- | --- | --- | --- | --- | --- | --- | --- |
| | | | C | Si | Mn | Ni | P | S | Cu | V | $N/mm^2$ | (kg/mm) | | |
| Conventional steel wire | | 11 | 0.80 | 0.21 | 0.52 | Tr | 0.006 | <0.005 | Tr | Tr | 3256 | (332) | 40 | 34 |
| | | 12 | 0.82 | 0.20 | 0.54 | Tr | 0.007 | - | Tr | Tr | 3266 | (333) | 41 | 33 |
| | | 13 | 0.84 | 0.20 | 0.51 | Tr | 0.007 | - | Tr | Tr | 3295 | (336) | 38 | 30 |
| Improved steel wire | Addition of Cu | 14 | 0.75 | 0.85 | 0.56 | 0.52 | 0.005 | - | 0.16 | Tr | 3432 | (350) | 43 | 35 |
| | | 15 | 0.82 | 0.68 | 0.51 | 0.20 | 0.004 | - | 0.26 | Tr | 3413 | (348) | 45 | 34 |
| | | 16 | 0.84 | 0.71 | 0.49 | 0.24 | 0.004 | - | 0.23 | Tr | 3481 | (355) | 42 | 32 |
| | Addition of V | 17 | 0.80 | 0.73 | 0.54 | 0.25 | 0.006 | - | Tr | 0.105 | 3462 | (353) | 44 | 32 |
| | | 18 | 0.83 | 0.70 | 0.53 | 0.49 | 0.007 | - | Tr | 0.54 | 3442 | (351) | 44 | 33 |
| | | 19 | 0.85 | 0.68 | 0.54 | 0.19 | 0.004 | - | Tr | 0.150 | 3462 | (353) | 43 | 30 |
| | V+Cu | 20 | 0.83 | 0.79 | 0.50 | 0.25 | 0.005 | - | 0.19 | 0.098 | 3481 | (355) | 44 | 33 |

As is obvious from Table II, as compared with the conventional steel wire, the improved steel wire shows a high level of strength exceeding tensile strength TS of 3432 N/mm² (350 kg/mm²) but reaches the target of RA (more than 40%) and TN (more than 30 times). Thus, the improved steel wire has high effectiveness for toughness retention in high strength.

Various corrosion tests were carried out, using samples A, B, C and D prepared from the improved steel wire 20, 16, 19 and the conventional steel wire 12 respectively in Table II.

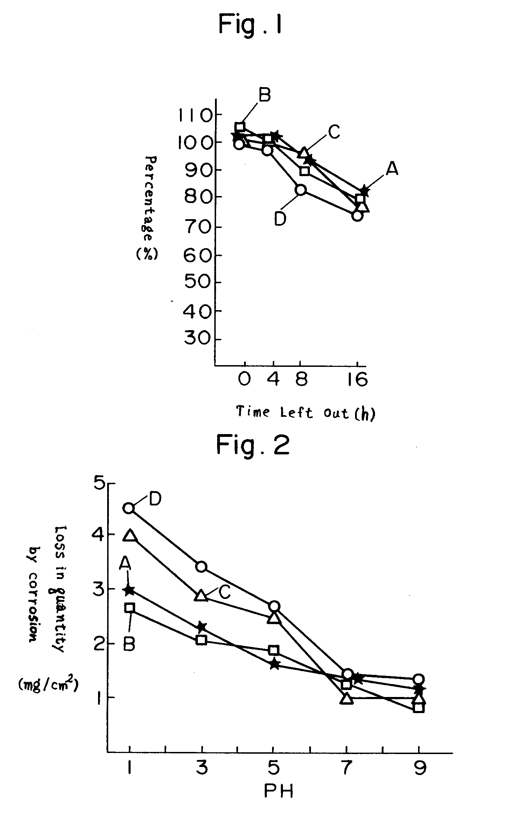

Fig. 1 is a graph showing the result of tests carried out by a Hunter type fatigue tester (fatigue test stress $\delta = 1471$ N/mm² (150 kg/mm²)) under the corrosion conditions 80°C x 80% RH on samples which were left as they were for 0 hour, 4 hours, 8 hours and 16 hours. The ordinate in Fig. 1 shows corrosion fatigue values (in percentage) in the case where the value of sample D of the conventional steel wire before corrosion (the case where the time in which it is left as it is is zero) is made 100%. The larger the numerical value, the better the corrosion fatigue value.

As can be seen from Fig. 1, samples A, B and C of the improved steel wire are superior to the sample D of the conventional steel wire in the corrosion fatigue value and also are small in the effective rate due to the time in which samples were left as they were and less in the effect of corrosion with the lapse of time.

Fig. 2 shows the results of tests of loss in quantity by corrosion in relation to pH. Each sample was soaked in a solution of 0.5 N - Nacl properly adjusted in pH with NaCl or HCl for 20 hours and then was measured for the difference in weight.

As can be seen from Fig. 2, samples A, B and C of the improved steel wire, as compared with sample D of the conventional steel wire, is resistant especially to strong acid.

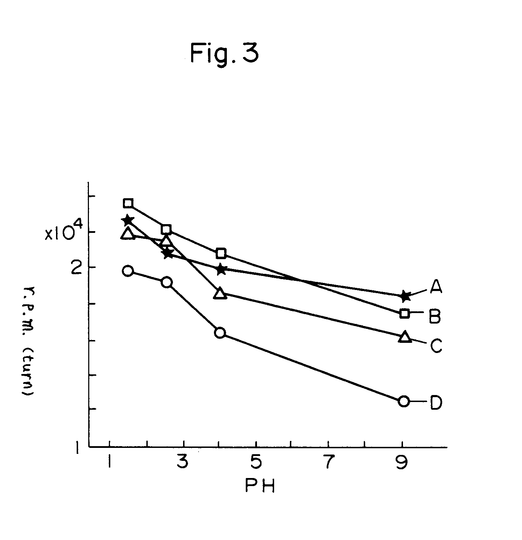

Fig. 3 shows the results of tests carried out by a Hunter type fatigue tester (fatigue test stress $\delta = 883$ N/mm² (90 Kg/mm²)) on samples A, B, C and D soaked in the solution which is the same as the solution used in Fig. 2.

5

As is obvious from Fig. 3, samples A, B, C of the improved steel wire, as compared with sample D of the conventional steel wire, are superior in corrosion fatigue resistance.

As a result of the above studies, we have completed a very fine steel wire for steel cord which has high strength, high toughness and adhesiveness to rubber and, where necessary, is imparted with corrosion-resistance. Then, this very fine steel wire was subjected to a conventional plating treatment, such as brass plating, and using such steel wire, various binds of steel cord, namely, regular cord, open cord, single cord and plural cord of properly selected twist pitch (5.0~20mm) and twist direction (S twist or Z twist) were made. These steel cords were subjected to various kinds of test and we finally completed the present invention.

Thus, a steel cord according to the present invention is essentially made by twisting together a plurality of very fine steel wires of a diameter of 0.10 ~ 0.50mm and tensile strength of 3236 - 3923 $N/mm^2$ (330 ~ 400$kg/mm^2$), each containing 0.75 to 0.95% by weight C, 0.45 - 1.20% by weight Si, 0.30 ~ 0.90% Mn, 0.05 to 1.00% by weight nickel and, where necessary, at least one of 0.10% ~ 0.50% by weight Cu and 0.05% to 1.0% by weight V, the remainder being Fe and incidental impurities.

As the twisting composition of the above steel cord, the following compositions are proper.

Open twist of 1 X N (3 ~ 5)

$$(1.1 \le \frac{\text{Average dia. of cord}}{\text{Dia. of cord at closed part}} \le 1.5)$$

1 x 2,

$$3 + 6 \quad (1.6 \le \frac{\text{Dia. of side wire}}{\text{Dia. of core wire}} \le 1.8)$$

2 + N(N=6-7)  (Dia. of core wire = Dia. of side wire)

$$3 + 9 \quad (1.05 \le \frac{\text{Dia. of core wire}}{\text{Dia. of side wire}} \le 1.25)$$

2 + 2

$$N_1 (2 \sim 4) + N_2 (7 \sim 9) + N_3 (12 \sim 15)$$

(The sum total of spaces between wires on the line connecting the centers of each wire of the intermediate layer $N_2$ is 5 to 20% of the length of the circumference of a circle connecting the centers of each wire of the intermediate layer $N_2$ and the sum total of spaces between wires of the outer layer $N_3$ is 5 to 20% of the length of the circumference of a circle connecting the centers of each wire of the outer layer $N_3$.)

A plurality of steel cords of the above composition are arranged at the whole part or a part of a belt portion, a carcass portion and a chafer portion of a tire so as to compose a tire. In order to improve work efficiency, it is possible to embed the required number of the above steel cord in rubber to form a reinforcing material of substantially belt-like shape and to embed such reinforcing material in the desired part of each portion of a tire.

The reason why chemical ingredients of each element added were limited is given below.

C is an important factor for ensuring the strength required for steel cord of this kind and at least about 0.6 Wt% should be contained. The more the content of C, the higher the strength of steel cord but if the content of C is excessive, breaking of a wire is apt to take place at a welded part and a segregation part at the time of wire drawing and wire stranding. Also, at a heat treatment, cementite is generated and this has a bad incluence on wire drawing and wire stranding.

From the above, the amount of C to be added should be within the range of 0.75 to 0.95 Wt%, preferably, the range of 0.75~ about 0.90 Wt%.

Si is necessary for deoxidizing steel. It is also effective for increasing the tensile strength of patenting treatment material for strengthening solid solution of ferrite. Therefore, similarly to the case of C, for obtaining the desired tensile strength (more than 3236 $N/mm^2$ (330 $kg/mm^2$)) the amount of Si to be added should be within the range of 0.45 to 1.20 Wt%, preferably, the range of about 0.50~about 0.90 Wt%. If the amount of Si added exceeds 1.20 Wt%, ductility and toughness of ferrite deteriorate and non-ductile interposition of $SiO_2$ system is generated and as a result, frequency of wire breaking at wire drawing and at wire stranding increases.

Mn is also necessary for deoxidation. It is effective for improving quenchability and tensile strength. In order to make Mn display the above effect efficiently, it is required to add Mn at least 0.30 Wt% but if the amount of Mn exceeds 0.90 Wt%, segregation tendency of ingredients increases and toughness and ductility are lowered. Therefore, the amount of Mn to be added should be within the range of 0.30 to 0.90 Wt%, preferably, about 0.40~0.70 Wt%.

Similarly to Si, Ni dissolves in solid in ferrite and is effective for raising slightly the tensile strength of patenting treating material.

The present inventors made experiments of wire drawing with various kinds of steel containing a proper amount of Ni and from these experiments, we found that Ni delays aging by C and N and is effective for producing very fine steel wire of high strength, without lowering toughness and ductility of steel wire.

The effect of delaying aging by Ni contributes to checking of longitudinal breaking at a torsion test and also decreasing the degree of breaking at wire drawing and wire stranding (because of high RA value). However, if Ni is added more than 1.00 Wt% for the purpose of raising quenchability, perfect perlite organization cannot be obtained at patenting but martensite organization takes place and as a result, difficulty is found in wire drawing process and wire stranding process. Also, if Ni is added in a large quantity for the purpose of lowering Ms point, residual austenite in organization increases and such austenite transforms to martensite at wire drawing and wire stranding, with the result of difficulty of wire stranding.

From the above, the amount of Ni to be added should be within the range of 0.05 to 1.00 Wt%, preferably, the range of about 0.10~ about 0.6 Wt%.

An explanation is made below about Cu and V which are added for imparting corrosion-resistance, with C, Si, Mn, Ni as basic elements to be added.

Cu is a metal which is more precious than $H_2$. It involves no corrosion of hydrogen generating type and improves corrosion-resistance effect to a large extent. However, If it is less than 0.10 Wt%, its effect lowers and if it exceeds 0.50 Wt%, toughness lowers.

Therefore, the amount of Cu to be added should be within the range of 0.10 to 0.50 Wt%, preferably, about 0.15~ about 0.30 wt%.

V is effective for corrosiveness of grain boundary. However, if it is less than 0.5% by weight, its effect lowers and if it exceeds 1.0% by weight, carbide educes, toughness lowers and processability worsens. Therefore, the amount of V to be added should be within the range of 0.05 to 1.0 Wt%, preferably, about 0.05~ about 0.3 Wt%.

While Cu is effective for corrosion at the surface of steel wire, V is effective for corrosion at the inside of steel wire. When either one of them or both are added according to the use, addition of a small amount within the range mentioned above will suffice.

A description is made below about embodiments of the present invention.

Embodiment 1

Using the conventional steel wire Ⓐ made from the conventional wire rod and the improved steel wires Ⓑ , Ⓒ , Ⓓ , Ⓔ , Ⓕ , each consisting of chemical ingredients (Wt%) shown in Table III,were made. In Table III,tensile strength TS, reduction of area RA and torsion TN show measured values of steel wire of a diameter of 0.20mm drawn to 98.1% reduction of surface.

## TABLE III

| Classification | Symbol | Chemical ingredients (Wt%) | | | | | | | TS | | RA % | TN Times |
|---|---|---|---|---|---|---|---|---|---|---|---|---|
| | | C | Si | Mn | Ni | P | S | Al | $N/mm^2$ | (kg/mm²) | | |
| Conventional steel wire | Ⓐ | 0.82 | 0.20 | 0.51 | 0.01 | 0.011 | 0.005 | 0.002 | 3236 | (330) | 39 | 32 |
| Improved steel wire | Ⓑ | 0.83 | 0.71 | 0.52 | 0.25 | 0.012 | 0.004 | 0.001 | 3550 | (362) | 47 | 37 |
| | Ⓒ | 0.82 | 0.84 | 0.53 | 0.50 | 0.011 | 0.003 | 0.001 | 3579 | (365) | 45 | 39 |
| | Ⓓ | 0.82 | 0.62 | 0.51 | 0.49 | 0.010 | 0.003 | 0.001 | 3638 | (371) | 48 | 41 |
| | Ⓔ | 0.85 | 0.83 | 0.52 | 0.16 | 0.008 | 0.004 | 0.002 | 3677 | (375) | 44 | 38 |
| | Ⓕ | 0.85 | 0.86 | 0.50 | 0.14 | 0.005 | 0.003 | 0.002 | 3540 | (361) | 47 | 37 |

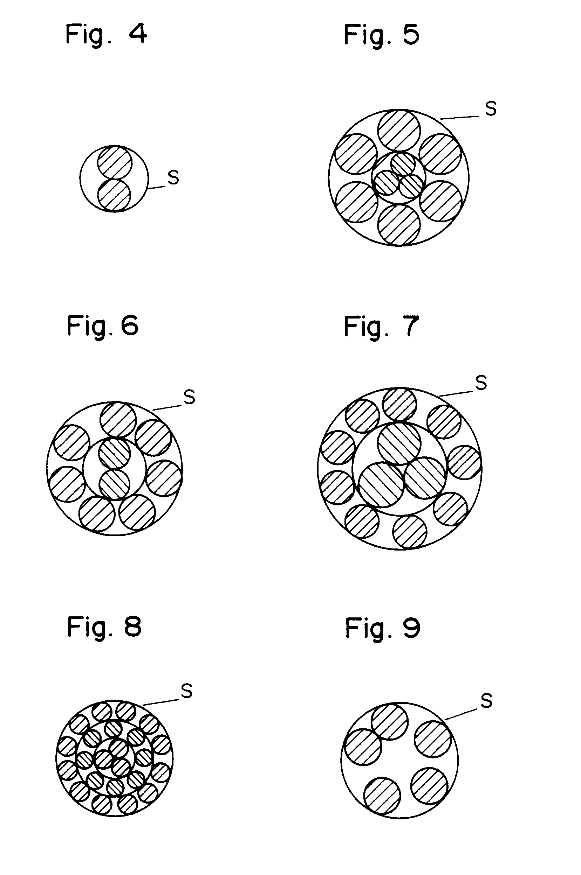

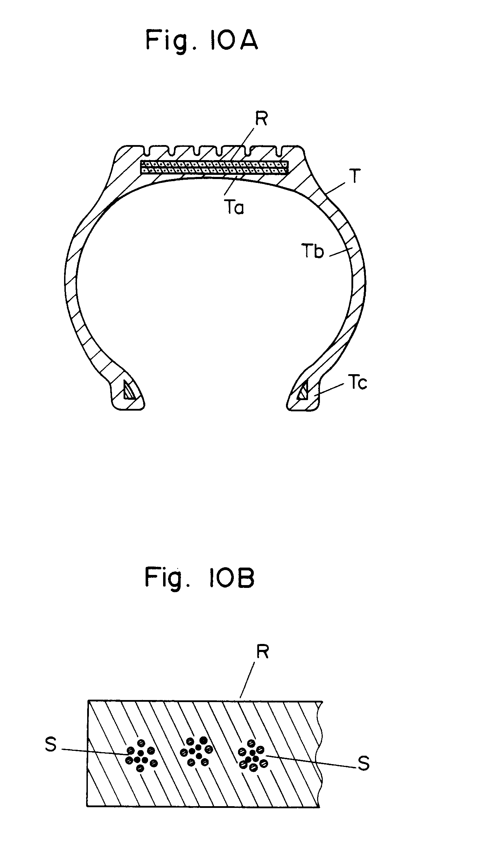

An example of the steel cords produced is shown in Fig. 4 through to Fig. 8. The composition of steel cord S in each figure is as shown below.

| Composition | Twisting direction | Twist pitch |
|---|---|---|
| 1 x 2 x 0.30 | S | 14.0 (Fig. 4) |
| 3 x 0.20 + 6 x 0.36 | S/Z | 10.0/18.0 (Fig. 5) |
| 2 + 7 x 0.22 | S/S | 10.0/10.0 (Fig. 6) |
| 3 x 0.22 + 9 x 0.20 | S/S | 6.0/12.0 (Fig. 7) |
| 3 + 8 + 12 x 0.20 | S/S/Z | 5.0/10.5/15.5 (Fig. 8) |

Table IV shown below.

## TABLE IV

| Steel cord No. | Steel wire No. | Specification of steel cord | | |
| | | Composition | Twist direction | Twist pitch |
|---|---|---|---|---|
| 1 | Ⓐ | 1×3×0.25 | S | 10.0 mm |
| 2 | 〃 | 1×4×0.25 | S | 〃 〃 |
| 3 | 〃 | 3×0.20+6×0.38 | S/Z | 10.0/18.0 〃 |
| 4 | 〃 | 1×12×0.20 | S | 12.5 〃 |
| 5 | 〃 | 3+9×0.20 | S/Z | 6.0/12.0 〃 |
| 6 | 〃 | 3+9+15×0.20 | S/S/Z | 6.0/12.0/18.0 〃 |
| 7 | Ⓒ | 1×3×0.25 | S | 10.0 〃 |
| 8 | 〃 | 1×4×0.25 | S | 〃 〃 |
| 9 | 〃 | 3×0.20+6×0.38 | S/Z | 10.0/18.0 〃 |
| 10 | Ⓓ | 1×12×0.20 | S | 12.5 〃 |
| 11 | 〃 | 3+9×0.20 | S/S | 6.0/12.0 〃 |
| 12 | 〃 | 3+9+15×0.20 | S/S/Z | 6.0/12.0/18.0 〃 |
| 13 | Ⓑ | 1×2×0.30 | S | 14.0 〃 |
| 14 | Ⓒ | 1×2×0.30 | S | 〃 〃 |
| 15 | 〃 | 3×0.20+6×0.36 | S/Z | 10.0/18.0 〃 |
| 16 | Ⓓ | 3×0.20+6×0.35 | S/Z | 10.0/18.0 〃 |
| 17 | Ⓑ | 2+6×0.22 | S/S | 12.0/12.0 〃 |
| 18 | Ⓔ | 2+7×0.22 | S/S | 6.0/12/0 〃 |
| 19 | Ⓒ | 3×0.22+9×0.20 | S/S | 14.5/14.5 〃 |
| 20 | Ⓔ | 3×0.22+9×0.20 | S/S | 6.0/12.0 〃 |
| 21 | Ⓓ | 2+2×0.25 | S·S | 14.0/14/0 〃 |
| 22 | Ⓕ | 2+2×0.22 | S·S | 12.0/12.0 〃 |
| 23 | Ⓔ | 3+8+12×0.20 | S/S/Z | 5.0/10.5/15.5 〃 |
| 24 | Ⓕ | 4+9+14×0.20 | S/S/Z | 〃 〃 |

Samples 1 - 24 for adhesion and fatigue tests were made by embedding the steel cords 1 - 24 in Table IV in vulcanized rubber. The results of pulling out tests, measuring of the degree of rusting and measuring of fatigue-resistance are shown in Table V.

## TABLE V

| No. | ① | ② | ③ | ④ | ⑤ | ⑥ | ⑦ | ⑧ | ⑨ | ⑩ | ⑪ | ⑫ |
|---|---|---|---|---|---|---|---|---|---|---|---|---|
| I | 24 | 25 | 29 | 26 | 30 | 26 | 25 | 23 | 27 | 25 | 29 | 27 |
| II | 121 | 120 | 118 | 119 | 105 | 109 | 119 | 122 | 119 | 119 | 107 | 108 |
| III | 100 | 100 | 100 | 100 | 100 | 100 | 102 | 103 | 106 | 103 | 105 | 106 |
| No. | ⑬ | ⑭ | ⑮ | ⑯ | ⑰ | ⑱ | ⑲ | ⑳ | ㉑ | ㉒ | ㉓ | ㉔ |
| I | 54 | 59 | 63 | 71 | 69 | 64 | 69 | 55 | 59 | 59 | 52 | 50 |
| II | 68 | 65 | 57 | 49 | 47 | 53 | 48 | 79 | 64 | 66 | 72 | 81 |
| III | 114 | 121 | 124 | 125 | 123 | 121 | 127 | 116 | 121 | 119 | 119 | 113 |

In Table V, No. indicates a sample No., I expresses the rate of pulling out force retention, II expresses the length (mm) of adhesiveness deterioration and III expresses fatigue resistance (ratio to the conventional steel wire).

In Table V, the rate of pulling out force retention shows the relation between the pulling out force by which a steel cord (before it is soaked in salt water) was pulled out and the pulling out force by which a steel cord (after it was soaked in 20% salt water for one week) was pulled out. The ratio when a steel cord is not aged (not deteriorated) is 100% and the larger the numerical value, the less the aging (deterioration), namely, the better the result.

The length of adhesiveness deterioration is explained below.

A sample (steel cord embedded in rubber) is cut in the length of 15cm. One end of the sample is covered with synthetic resin paint so that a corrosive liquor may not permeate. The sample is soaked in a sodium hydroxide aqueous solution (10% concentration) for 24 hours at a room temperature and then the length of the part which deteriorated in adhesiveness between steel cord and rubber due to corrosion of steel cord (namely, the part where steel cord and rubber do not adhere to each other) is measured. The measured value is expressed by mm. 150mm means that adhesiveness deteriorated throughout the whole length. The larger the numerical value, the greater the diffusion of rust.

Fatigue-resistance is shown by indexes on the basis that the conventional steel wire (sample No.① ) is made 100.

As is obvious from Table V, as compared with samples ① - ⑥ made from the conventional steel wire, samples ⑦ - ⑫ of the conventional twisting composition made from the improved steel wire show improvements in fatigue-resistance. Samples ⑬ - ⑭ made from the improved steel wire show much improvements in the rate of pulling out force retention, adhesiveness deterioration length and fatigue-resistance, as compared with samples ① - ⑥.

According to this embodiment, steel cords of the specific twisting composition made from the improved steel wire do not lower in plastic processability at wire drawing and wire stranding, have high toughness and excellent ductile and tough effect, are superior in rubber penetrability and adhesiveness with rubber, are perfectly coverable with rubber at the surface and prevent water from entering therein.

Embodiment 2

Using the conventional steel wire Ⓐ and the improved steel wire Ⓑ - Ⓕ of the same metal composition as the Embodiment 1, steel cords 25 - 33 of the twist composition shown in Table VI were made. Easiness of twist processing is remarked in Table VI. Fig. 9 shows an example of the steel cord S produced which is of open construction of 1 x 5 x 0.25.

TABLE VI

| Specification of steel cord | | | | | | |
|---|---|---|---|---|---|---|
| Steel cord No. | Steel wire symbol | Composition | Dia. of element wire | How to twist | $D_1/D_2$ | Easiness of twist |
| 25 | Ⓐ | 1x5 | 0.25 | Close | - | △ |
| 26 | Ⓐ | " | " | Open | 1.13 | x |
| 27 | Ⓒ | " | " | Close | - | ○ |
| 28 | Ⓒ | " | " | Open | 1.08 | ○ |
| 29 | Ⓒ | " | " | " | 1.15 | ○ |
| 30 | Ⓑ | 1x4 | " | " | 1.20 | ○ |
| 31 | Ⓓ | 1x5 | " | " | 1.25 | ○ |
| 32 | Ⓔ | 1x4 | " | " | 1.30 | ○ |
| 33 | Ⓕ | 1x5 | " | " | 1.45 | ○ |

Samples 25 - 33 for adhesion and fatique tests were prepared by embedding steel cords 25 - 33 shown in Table VI in vulcanized rubber. Tests were carried out in the same way as Embodiment 1, with the results shown in Table VII.

TABLE VII

| No. | ㉕ | ㉖ | ㉗ | ㉘ | ㉙ | ㉚ | ㉛ | ㉜ | ㉝ |
|---|---|---|---|---|---|---|---|---|---|
| I | 24 | 50 | 25 | 50 | 58 | 52 | 53 | 77 | 81 |
| II | 123 | 70 | 116 | 69 | 54 | 61 | 57 | 27 | 24 |
| III | 100 | 103 | 102 | 106 | 110 | 108 | 109 | 114 | 115 |

In the above table, No. expresses sample No., I expresses the rate of pulling out force retention, II expresses the length (mm) of adhesion deterioration and III expresses fatigue-resistance (ratio to the conventional steel wire).

As is obvious from Table VII, as compared with sample ㉕ of the conventional steel wire, sample ㉗ of the improved steel wire with the conventional closed twist is excellent in twist processability and is improved in fatigue-resistance. Samples ㉘ - ㉝ of the improved steel wire having the specific open construction (rubber is easily penetrable) are superior in twist processability and as compared with samples ㉕, ㉖ of the conventional steel wire, have excellent effectiveness.

The steel cord according to the present invention produced the dramatic effect due to multiple effect of the specific metal composition and twist composition. Also, it involves no wire breaking at the wire stranding process and therefore steel cord of open construction having the desired space can be produced.

Embodiment 3

Using the conventional steel wire Ⓖ and the improved steel wires Ⓗ , Ⓘ , Ⓙ having chemical ingredients (Wt%) shown in Table VIII with the remainder consisting of Fe and incidental impurities, steel cords 34 - 39 of twist composition shown in Table IX were made. In Table VIII, tensile strength TS, reduction of area RA and torsion TN are measured values of steel cord drawn to a diameter of 0.23mm and reduction of surface 97.3%.

## TABLE VIII

| Classifications | Steel wire symbol | Chemical ingridients (Wt%) | | | | | | | | TS | | RA | TN |
|---|---|---|---|---|---|---|---|---|---|---|---|---|---|
| | | C | Si | Mn | Ni | Cu | V | P | S | $N/mm^2$ | (kg/mm) | % | Times |
| Conven. steel wire | Ⓖ | 0.82 | 0.20 | 0.54 | Tr | Tr | Tr | 0.007 | <0.005 | 3266 | (333) | 41 | 33 |
| Improved steel wire | Ⓗ | 0.83 | 0.79 | 0.50 | 0.25 | 0.19 | 0.098 | 0.005 | <0.005 | 3481 | (355) | 44 | 33 |
| | Ⓘ | 0.87 | 0.87 | 0.57 | 0.16 | 0.26 | Tr | 0.006 | 0.001 | 3491 | (356) | 44 | 30 |
| | Ⓙ | 0.83 | 0.70 | 0.53 | 0.49 | Tr | 0.097 | 0.007 | <0.005 | 3442 | (351) | 44 | 33 |

## TABLE IX

| Steel cord No. | Steel wire symbol | Specification of steel cord | | Twist pitch |
|---|---|---|---|---|
| | | Composition | Twisting direction | |
| 34 | Ⓖ | 1 x 12 x 0.23 + 1 | S | 12.0 |
| 35 | Ⓖ | 1 x 5 x 0.23 | S | 9.5 |
| 36 | Ⓖ | 1 x 5 x 0.23 | S | 9.5 |
| 37 | Ⓗ | 1 x 12 x 0.23 + 1 | S | 12.0 |
| 38 | Ⓘ | 1 x 5 x 0.23 | S | 9.5 |
| 39 | Ⓙ | 1 x 4 x 0.23 | S | 9.5 |

## TABLE X

| No. | ㉞ | ㉟ | ㊱ | ㊲ | ㊳ | ㊴ |
|---|---|---|---|---|---|---|
| I | 38 | 47 | 48 | 53 | 51 | 55 |
| II | 119 | 74 | 73 | 72 | 61 | 53 |
| III | 100 | 100 | 100 | 117 | 113 | 115 |

Samples 34 - 39 for adhesion and fatigue tests were made by embedding steel cords 34 - 39 shown in Table IX in vulcanized rubber. Results of pulling out tests, measuring of the degree of rusting and measuring of fatigue-resistance are shown in Table X.

In the above Table X, No. expresses sample No., I expresses the rate of pulling out force retention, II expresses the length (mm) of adhesion deterioration and III expresses fatigue-resistance (ratio to the conventional steel cord).

As is obvious from Table X, as compared with samples ㉞ - ㊱ made from the conventional steel wire, samples ㊲ - ㊴ of steel cord from the improved steel wire show much improvements in respect of the rate of pulling out force retention, length of adhesion deterioration and fatigue-resistance.

Steel cord of this embodiment has excellent ductility and toughness retaining effect by adding Si and Ni in a properly increased amount as basic elements to be added, even if it is formed to have a tensile strength of more than 3334 N/mm$^2$ (340 kg/mm$^2$). With regard to the corrosion-resistance effect,

i) corrosion-resistance effect was displayed by adding Cu and a high fatigue value was obtained under corrosion conditions.

ii) As the effect by adding V, vanadium carbide educed to the grain boundary due to the patenting treatment and a high fatigue value was obtained in relation to corrosion of grain boundary.

iii) Furthermore, by adding Cu and V at the same time, the effects of i) and ii) above were presented multiplicatively and corrosion-resistance was improved still further.

Using steel cords according to the present invention and the conventional steel cords in the above Embodiments 1, 2 and 3, plural number of steel cord S in Fig. 4, for example, were arranged in parallel and were covered with a rubber material to form a reinforcing material R. This reinforcing material R was embedded in a belt portion of a tire to make a tire T (Fig. 10). In Fig. 10, Tb designates a carcass portion and Tc designates a chafer portion.

The above tires were measured for durabilith and kinetic capability, with the following results. In appraising the durability of tires, after the actual car long-distance running tests were carried out, tires were cut purposely and analyzed to measure damaged conditions and rusting conditions of steel cord. For appraising kinetic capability, cornering power, comfortableness to ride in and economy were measured.

As compared with tires using the steel cord made from the conventional steel wire, tires using the steel cord of Embodiment 1 showed little difference in respect of cornering power and comfortableness to ride in but showed big difference in respect of breaking and rusting of steel cords. Tires using the steel cord of Embodiment 1 could save the use of steel cord by about 12% (lightening of tire in weight) and fuel consumptions in relation to running distance could also be saved to a large extent, with resultant improvement of economics.

As compared with the conventional tires, tires using steel cords of Embodiments 2 and 3 were much improved in respect of economics, comfortableness to ride in and durability and also lightening of tires in weight could be planned. In the case where steel cords of the embodiment were arranged in a belt portion close to a tread which makes direct contact with the road surface, conspicuous effect was observed.

Use of the conventional steel cords at a carcass portion and a tread portion of a vehicle tire involved such phenomenon that due to salt scattered on the road in winter for preventing freezing, water containing NaCl enters into tires through cracks at the surface of tires and if such water reaches steel cord, inside of the steel cord corrodes soon. While this tendency to corrosion was especially shown by high tensile wire, steel cord of Embodiment 3 can prolong the life of tires by its corrosion-resistance effect.

A steel cord according to the present invention is composed of steel wires for which the amounts of C and Mn (basic elements to be added) to be added are adjusted, the amount of Si to be added is increased, Ni is added within the proper range and, where necessary, at least one of Cu and V is added in a proper quantity. Therefore, it has excellent ductility and toughness effect, namely, tensile strength of 3236 - 3923 N/mm$^2$ (330~400 kg/mm$^2$), reduction of area of more than 40% and torsion of more than 30 times. Furthermore, it is improved in adhesiveness with rubber and corrosion-resistance. Also, if it is made in specific twist construction, it does not lower in workability, has excellent toughness and strength, provides good penetrability for rubber and is completely coverable with rubber for preventing water and others from entering into steel cord.

In addition, use of steel cords for rubber products, especially vehicle tires, contributes to drastic improvements of economics, comfortableness to ride in and durability. Also, lightenining of vehicle tires in weight can be planned.

13

**Claims**

1. A steel cord comprising a plurality of very fine steel wires twisted together, each having a wire diameter of ranging from 0.10 to 0.50mm and containing:
   from 0.75 to 0.95% by weight carbon;
   from 0.45 to 1.20% by weight silicon;
   from 0.30 to 0.90% by weight manganese;
   from 0.05 to 1.0% by weight nickel; and
   the remainder being iron and incidental impurities.

2. A steel cord as set forth in Claim 1, wherein at least one of 0.10 to 0.50% by weight copper and 0.05 to 1.0% by weight vanadium is added, on the cost of the balance iron.

3. A steel cord as set forth in Claim 1, wherein silicon content is 0.5 to 0.90% by weight and nickel content is 0.10 to 0.6% by weight.

4. A steel cord as set forth in Claim 2, wherein copper content is 0.15 to 0.3% by weight and vanadium content is 0.05 to 0.3% by weight.

5. A steel cord as set forth in Claim 1, wherein wires of steel cord are 0.20~0.40mm in diameter, 3236 - 3922 $N/mm^2$ (330~400Kg/mm$^2$) in tensile strength, more than 40% in reduction of area and more than 30 times in torsion.

6. A steel cord as set forth in Claim 1, wherein the twist composition is 1 x N(N = 3~5) and an open twist of

$$1.1 \leqq \frac{\text{Average diameter of cord}}{\text{Diameter of cord at closed portion}} \leqq 1.5$$

7. A steel cord as set forth in Claim 1, wherein the twist composition is 3 + 6 and

$$1.6 \leqq \frac{\text{diameter of side wire}}{\text{diameter of core wire}} \leqq 1.8$$

8. A steel cord as set forth in Claim 1, wherein the twist composition is 2 + N(N = 6-7) and diameter of core wire = diameter of side wire.

9. A steel cord as set forth in Claim 1, wherein the twist composition is 3 + 9 and

$$1.05 \leqq \frac{\text{diameter of core wire}}{\text{diameter of side wire}} \leqq 1.25$$

10. A steel cord as set forth in Claim 1, wherein the twist composition is $N_1(2~4) + N_2(7~9) + N_3(12~15)$.

11. A tire having a reinforcing material which consists of a plurality of steel cords set forth in Claim 1 covered with rubber material and embedded in at least a part of a belt portion, a carcass portion and a chafer portion.

12. A tire having a reinforcing material which consists of a plurality of steel cords set forth in Claim 2 covered with rubber material and embedded in at least a part of a belt portion, a carcass portion and a chafer portion.

**Patentansprüche**

1. Stahlcord, **gekennzeichnet durch** eine Vielzahl miteinander verseilter sehr feiner Stahldrähte im Durchmesserbereich 0.10-0.50 mm und mit 0.75-0.95 Gew.-% Kohlenstoff, 0.45-1.20 Gew.-% Silizium, 0.30-0.90 Gew.-% Mangan und 0.05-1.0 Gew.-% Nickel, Rest Eisen und Begleitelemente.

2. Stahlcord nach Anspruch 1, **dadurch gekennzeichnet**, dass mindestens eines der Elemente Kupfer und Vanadium zu Lasten des Eisenrestes zugesetzt wird, und zwar in dem Mengen 0.10-0.50 Gew.-% bei Kupfer und 0.05-1.0 Gew.-% bei Vanadium.

3. Stahlcord nach Anspruch 1, **dadurch gekennzeichnet**, dass der Anteil an Silizium 0.5-0.90 Gew.-% und an Nickel 0.10-0.6 Gew.-% beträgt.

4. Stahlcord nach Anspruch 2, **dadurch gekennzeichnet**, dass Kupfer im Mengenbereich 0.15-0.3 Gew.-% und Vanadium im Mengenbereich 0.05-0.3 Gew.-% enthalten ist.

5. Stahlcord nach Anspruch 1, **dadurch gekennzeichnet**, dass die Stahldrähte jeweils einen Durchmesser von 0.20-0.40 mm, eine Bruchfestigkeit von 3236-3922 N/mm$^2$ (330-400 kg/mm$^2$), eine Querschnittsverringerung von über 40 % und eine Verdrehungsfestigkeit von mehr als dem 30fachen.

6. Stahlcord nach Anspruch 1, **gekennzeichnet durch** eine Verseilzusammensetzung von 1 x N(N = 3-5) und eine offene Verseilung von

$$1.1 \leq \frac{\text{mittl. Corddurchm.}}{\text{Corddurchm. im geschlossenen Teil}} \leq 1.5.$$

7. Stahlcord nach Anspruch 1, **gekennzeichnet durch** die Verseilzusammensetzung

$$3 + 6 \text{ und } 1.6 \leq \frac{\text{Durchm. Aussendraht}}{\text{Durchm. Innendraht}} \leq 1.8.$$

8. Stahlcord nach Anspruch 1, **gekennzeichnet durch** die Verseilzusammensetzung 2 + N (N = 6-7) und Durchmesser Innendraht = Durchmesser Aussendraht.

9. Stahlcord nach Anspruch 1, **gekennzeichnet durch** die Verseilzusammensetzung

$$3 + 9 \text{ und } 1.05 \leq \frac{\text{Durchm. Innendraht}}{\text{Durchm. Aussendraht}} \leq 1.25.$$

10. Stahlcord nach Anspruch 1, **gekennzeichnet durch** die Verseilzusammensetzung $N_1$ (2-4) + $N_2$ (7-9) + $N_3$ (12 - 15).

11. Reifen **gekennzeichnet durch** Verstärkungsmaterial aus einer Vielzhal der in Anspruch 1 offenbarten Stahlcords, die mit Gummimaterial umhüllt und in mindestens einem Teil eines Gürtel-, Karkassen- und Wulstbereichs eingebettet sind.

12. Reifen **gekennzeichnet durch** Verstärkungsmaterial aus einer Vielzhal der in Anspruch 2 offenbarten Stahlcords, die mit Gummimaterial umhüllt und in mindestens einem Teil eines Gürtel-, Karkassen- und Wulstbereichs eingebettet sind.

**Revendications**

1. Un câble en acier comprenant une pluralité de fils en acier très fins torsadés ensemble, chacun des fils présentant un diamètre compris entre 0,10 et 0,50 mm et contenant:
   - de 0,75 à 0,95% en poids de carbone;
   - de 0,45 à 1,20% en poids de silicium;
   - de 0,30 à 0,90% en poids de manganèse;
   - de 0,05 à 1,0% en poids de nickel;
   le reste étant du fer et des impuretés accidentelles.

2. Un câble en acier selon la revendication 1, dans lequel est ajouté au moins un élément parmi du cuivre de 0,10 à 0,50% en poids et du vanadium de 0,05 à 1,0% en poids, pris sur le total du fer.

3. Un câble en acier selon la revendication 1, dans lequel la teneur en silicium est de 0,5 à 0,9% en poids et la teneur en nickel est de 0,10 à 0,6% en poids.

4. Un câble en acier selon la revendication 2, dans lequel la teneur en cuivre est de 0,15 à 0,3% en poids, et la teneur en vanadium est de 0,05 à 0,3% en poids.

5. Un câble en acier selon la revendication 1, dans lequel les fils du câble en acier présentent un diamètre de 0,20~0,40 mm, une résistance à la traction de 3236 à 3922 $N/mm^2$ (330~400 $kg/mm^2$), dont la striction est supérieure à 40% et elle est supérieure à 30 fois en torsion.

6. Un câble en acier selon la revendication 1, dans lequel la composition de la torsade est de 1xN (N = 3~5) avec une torsade ouverte de

$$1,1 \leq \frac{\text{Diamètre moyen du câble}}{\text{Diamètre du câble dans partie fermée}} \leq 1,5$$

7. Un câble en acier selon la revendication 1, dans lequel la composition de la torsade est de 3 + 6 et

$$1,6 \leq \frac{\text{Diamètre du fil latéral}}{\text{Diamètre du fil de coeur}} \leq 1,8$$

8. Un câble en acier selon la revendication 1, dans lequel la composition de la torsade est de 2 + N (N = 6 à 7) et le diamètre du fil de coeur = diamètre du fil latéral.

9. Un câble en acier selon la revendication 1, dans lequel la composition de la torsade est 3 + 9 et

$$1,05 \leq \frac{\text{Diamètre du fil de coeur}}{\text{Diamètre du fil latéral}} \leq 1,25$$

10. Un câble en acier selon la revendication 1, dans lequel la composition de la torsade est de $N_1$(2~4)- + $N_2$(7~9) + $N_3$(12~15).

11. Un bandage pneumatique muni d'un matériau de renforcement qui consiste en une pluralité de câbles en acier selon la revendication 1, recouvert d'un matériau élastomère et noyé dans au moins une partie de bande de roulement, une partie de carcasse, et une partie de talon.

12. Un bandage pneumatique muni d'un matériau de renforcement, qui consiste en une pluralité de câbles en acier selon la revendication 2, recouvert de matériau élastomère et noyé dans au moins une partie de bande de roulement, une partie de carcasse, et une partie de talon.

## Fig . I

## Fig . 2

# Fig. 3

Fig. 4

Fig. 5

Fig. 6

Fig. 7

Fig. 8

Fig. 9

Fig. IOA

Fig. IOB